# EUROPÄISCHE PATENTSCHRIFT

(11) **EP 1 091 792 B1**
(45) Veröffentlichungstag und Bekanntmachung des Hinweises auf die Patenterteilung: **04.12.2002**
(21) Anmeldenummer: 99929263.4
(22) Anmeldetag: 17.06.1999
(51) Int. Cl.: B01D 29/00, B01D 46/24

(54) **MEHRFACHFILTERGEHÄUSE MIT VERRIEGELUNGSEINRICHTUNG FÜR FILTERELEMENTE**
MULTIPLE FILTER HOUSING WITH A LOCKING DEVICE FOR FILTER ELEMENTS
BOITIER FILTRANT MULTIPLE MUNI D'UN SYSTEME DE VERROUILLAGE POUR ELEMENTS FILTRANTS

(30) Priorität: 27.06.1998 DE 19828840
(43) Veröffentlichungstag der Anmeldung: 18.04.2001
(73) Patentinhaber: SARTORIUS AG, 37075 Göttingen (DE)
(72) Erfinder: VON DER HARDT, Jochen, D-37083 Göttingen (DE); QUASCHNING, Ulrich, D-37077 Göttingen (DE); JORNITZ, Maik, D-37083 Göttingen (DE)
(86) Internationale Anmeldenummer: EP9904216
(87) Internationale Veröffentlichungsnummer: WO00000262

(56) Entgegenhaltungen:
- DE-A- 2 118 405
- US-A- 5 770 066

## Beschreibung

Die vorliegende Erfindung betrifft ein Mehrfachfiltergehäuse zur Filtration von Fluiden, das mit einer Verriegelungseinrichtung für Filterlemente ausgestattet ist.

Mehrfachfiltergehäuse, die mit einer Vielzahl von Filterelementen wie Filterkerzen und Wickelmodule bestückt sind, werden zum Beispiel zur Druckfiltration von Flüssigkeiten und Gasen benutzt. Sind die Filterkerzen und Wickelmodule mit Filtermembranen als Filtermaterial ausgerüstet, können Mehrfachfiltergehäuse zur Abtrennung von unerwünschten Bestandteilen beispielsweise von Schadstoffen, wie Schwermetallionen, Mikroorganismen aus Abwasser, Getränken, zur Aufkonzentrierung von Proteinen, zur Sterilfiltration in der Pharmaindustrie und so weiter benutzt werden.

Im Filtrationsbetrieb und bei Reinigungsoperationen sind die Filterelemente mechanischen Belastungen ausgesetzt. Dabei wirken sich Verwindungen der aus Kunststoff bestehenden Filterelemente aus ihrer Längsachse heraus besonders gravierend aus, indem sie zu Beschädigungen an den Filterelemente einschließlich an den Filtermaterialien führen und diese unbrauchbar machen. Derartige Verwindungen werden in erster Linie durch Strömungsturbulenzen, Druckstöße und Rückspülungen verursacht.

Es ist bekannt, derartige Verwindungen der Filterelemente in Mehrfachfiltergehäusen durch Verriegelungseinrichtungen zu verhindern. So offenbart die SU-A1 17 54 157 ein Mehrfachfiltergehäuse mit einer Vielzahl von Filterelementen, die reinseitig von einer Grundplatte aufgenommen werden. Oberhalb der Filterelemente befindet sich trübseitig eine plattenförmige Anpreßvorrichtung, durch welche Regulierschrauben bis auf die Endkappen der Filterelemente herab hindurchgerührt werden, um diese zu verriegeln. Die plattenförmige Anpreßvorrichtung ist an einer zentralen Abstandshalterstange befestigt. Mit dieser Verriegelungseinrichtung können auch Unterschiede in der Bauhöhe der Filterelemente individuell mittels der Regulierschrauben ausgeglichen werden. Nachteilig ist aber. daß sich die Filterelemente bei unterschiedlichen Temperaturen, beispielsweise bei der Inline-Heißdampfsterilisation, in ihrer Länge nicht ausdehnen können, was zu Verwindungen und Beschädigungen der Filterelemente führen kann. Ein weiterer Nachteil besteht darin, daß die Verriegelungseinrichtung aus einer Vielzahl von Einzelteilen besteht, was mit einem hohen Zeitaufwand bei der Montage und Demontage der Filterelemente verbunden ist und daß zahlreiche Kanten und Hohlräume vorhanden sind, die sich schlecht reinigen lassen. Eine solche Konstruktion entspricht nicht den allgemein anerkannten US-Vorschriften der FDA (Food and Drug Administration des U.S. Department of Health, Education and Welfare) und ist keine gemäß dieser Administration empfohlene GMP-Konstruktion (Good Manufacturing Practices). Sie ist als technische Lösung unbefriedigend.

Der Erfindung liegt daher die Aufgabe zugrunde, ein Mehrfachfiltergehäuse mit einer Verriegelungseinheit für Filterelemente aus wenigen Bauteilen zu schaffen, bei dem eine Verwindung der Filterelemente verhindert, Toleranzen bezüglich der Bauhöhe der Filterelemente akzeptiert und eine Ausdehnung der Filterelemente gesichert wird. Die Verriegelungseinheit soll einfach und sicher zu handhaben sein. Schwer zu reinigende Stellen sollen vermieden werden.

Die Aufgabe wird durch die in den Hauptansprüchen angegebenen Merkmale gelöst. Vorteilhafte Ausgestaltungen der Erfindung werden durch die Merkmale der Unteransprüche definiert.

Das Mehrfachfiltergehäuse, das im wesentlichen aus einem Gehäusedom und einer Gehäusebasis mit einer Grundplatte besteht, verfügt über eine Verriegelungseinrichtung aus einer Abstandshalterstange und einer Zentrierplatte. Das Mehrfachfiltergehäuse ist darüberhinaus mit Anschlüssen für eine Zu- und Abfuhr von Fluiden ausgestattet und nimmt eine Vielzahl patronenartiger Filterelemente, wie Filterkerzen oder Wickelmodule auf, die über bekannte Vorrichtungen an der Grundplatte aufgenommen und fixiert sind, derart, daß das Mehrfachfiltergehäuse in einen Trüb- und Reinraum getrennt wird und das zu filtrierende Fluid durch Anlegen einer Druckdifferenz zwischen Trüb- und Reinraum bestimmungsgemäß nur durch die Filtermaterialien der Filterelemente von dem einen in den anderen Raum gelangen kann. Die Filterelemente weisen an ihrem der Grundplatte abgewandten Ende Führungsadapter auf, die einen geringeren Durchmesser haben als der Durchmesser der patronenartigen Filterelemente selbst und üblicherweise nach oben verjüngend auslaufen. Das Mehrfachfiltergehäuse kann in jeder Lage betrieben werden, es wird aber vorzugsweise so betrieben, daß die Filterelemente aufrecht stehen, das heißt, daß die Führungsadapter nach oben zeigen.

Erfindungsgemäß besitzt die Zentrierplatte der Verriegelungseinrichtung eine Verriegelungsöffnung und wenigstens Öffnungen zur Aufnahme der Filterelemente oder in einer alternativen Ausführungsform wenigstens Öffnungen zur Aufnahme der Führungsadapter der Filterelemente. Die Abstandshalterstange ist mit einem Ende rechtwinklig und starr mit der Gehäusebasis oder Grundplatte verbunden. Sie verfügt über mindestens einen Bereich eines ersten Abschnitts und über mindestens einen Bereich eines zweiten Abschnitts mit einem Verriegelungsprofil. In einer bevorzugten Ausführungsform der Erfindung ist der mindestens eine Bereich des ersten Abschnitts der Endabschnitt des freien Endes der Anstandshalterstange und beginnt oberhalb der Fühungsadapter und endet innerhalb der oberen Hälfte, vorzugsweise des oberen Drittels der Filterelemente oder in einer alternativen Ausführungsform innerhalb des sich verjüngenden Abschnittes der Führungsadapter. Der mindestens eine Bereich des zweiten Abschnittes mit dem Verriegelungsprofil erstreckt sich bis höchstens zur Hälfte, vorzugsweise zum Ende des oberen Drittels der Filterelemente. In der alternativen Ausführungsform liegt die untere Begrenzung des Abschnitts mit dem Verriegelungsprofil mindestens in Höhe der Führungsprofile dee Führungsadapter der Filterelemente. Die Abstandshalterstange greift nun mit dem freien Ende durch die Verriegelungsöffnung der Zentrierplatte derart, daß die Zentrierplatte in den Bereichen der ersten Abschnitte der Abstandshalterstange radial um die und axial entlang der Abstandshalterstange und in den Bereichen der zweiten Abschnitte mit dem jeweiligen Verriegelungsprofil in Verriegelungsstellung nur noch axial entlang der Abstandshalterstange über die Länge des verriegelten zweiten Abschnittes beweglich ist.

Bei der Montage wird die Zentrierplatte mit der Verriegelungsöffnung auf den ersten Abschnitt der Abstandshalterstange geschoben und so weit radial gedreht, bis ihre Öffnungen die Führungsadapter aufnehmen können. Sie wird dann in axialer Richtung abgesenkt und mit dem Verriegelungsprofil der Abstandshalterstange verriegelt (arretiert). In Verriegelungsstellung ist eine rechtwinklige Ausrichtung der Filterelemente bezüglich der Grundplatte gewährleistet, wodurch der Gehäusedom problemlos aufgesetzt und mit der Gehäusebasis verbunden werden kann.

In einer vorteilhaften Ausführungsform der Erfindung ist die Verriegelungsöffnung der Zentrierplatte in Gestalt einer Lochkontur aus einer kreisrunden Bohrung mit einem Ausbruch ausgestaltet, der eine geringere Breite besitzt als der Durchmesser der Bohrung. Zur Verriegelung wird die Zentrierstange so in Richtung dieses Ausbruchs gedrückt, daß das Verriegelungsprofil der Abstandshalterstange formschlüssig in den Ausbruch eindringt. Der Ausbruch kann beispielsweise in Form eines Rechtecks, vorzugsweise mit abgerundeten Ecken ausgeführt sein. Wenn sich die Abstandshalterstange entlang der Mittelachse des Mehrfachfiltergehäuses erstreckt, ist es vorteilhaft, wenn der Mittelpunkt des Ausbruchs auf dieser Achse liegt und den Mittelpunkt eines Kreises bildet, den die Peripherie der Zentrierplatte nicht überschreitet. Der Mittelpunkt des Ausbruchs bildet demnach den Mittelpunkt einer kreisförmigen Zentrierplatte und ihr Kreisbogen wird geringfügig kleiner ausgeführt als der Innenumfang des Mehrfachfiltergehäuses. Andernfalls würde der Gehäusedom nicht aufsetzbar sein oder die Zentrierplatte zumindest nicht waagerecht in das Mehrfachfiltergehäuse einbringbar sein.

Dadurch, daß lediglich eine Verschiebung der Zentrierplatte in axialer Richtung möglich ist, können sich die Filterelemente axial ausdehenen, aber nicht verwinden. Wenn die Zentrierplatte in der alternativen Ausführungsform nur die Führungsadapter der Filterelemente aufnimmt, wird die Zentrierplatte dabei durch die sich in Längsrichtung ausdehnenden Filterelemente einfach nach oben geschoben.

Weil in dieser Ausführungsform die untere Begrenzung des Abschnitts mit dem Verriegelungsprofil der Abstandshalterstange in Höhe des Führungsprofils des Führungsadapters des Filterelements mit der größten Bauhöhe liegt, die Länge des zweiten Abschnitts mit dem Verriegelungsprofil der Abstandshalterstange kleiner als die Höhe der Führungsadapter der Filterelemente und der Durchmesser der Öffnungen der Zentrierplatte zur Aufnahme der Führungsadapter der Filterelemente größer als der Durchmesser der Führungsadapter aber geringer als der Durchmesser der Filterelemente ist, spielen unterschiedliche Bauhöhentoleranzen der Filterelemente keine Rolle.

Beim Zusammenziehen der Filterelemente, zum Beispiel bei ihrer Abkühlung, sinkt die Zentrierplatte durch ihr Eigengewicht abwärts. Die Zentrierplatte wird deshalb vorzugsweise aus Edelstahl gefertigt.

In einer weiteren vorteilhaften Ausgestaltung der Erfindung weist die Zentrierplatte periphere Aussparungen und/oder Durchbrüche auf. Dadurch wird erreicht, daß das zu filtrierenden Fluids ungehindert beidseits der Zentrierplatte zirkulieren kann. Die Aussparungen und Durchbrüche wirken außerdem einem Aufschwimmen der Zentrierplatte entgegen, was bei starken Druckstößen eintreten könnte.

Insbesondere bei Mehrfachfiltergehäusen mit mehr als zwei Filterelementen ist es vorteilhaft, die auf der Symmetrieachse der Lochkontur der Verriegelungsöffnung der Zentrierplatte angeordneten Öffnungen zur Aufnahme der Führungsadapter der Filterelemente als Langloch auszubilden. Das erleichtert das Aufsetzen und Verriegeln der Zentrierplatte.

Weiterhin ist es vorteilhaft, auf der Symmetrieachse der Lochkontur der Verriegelungsöffnung der Zentrierplatte einen Durchbruch an der Peripherie der Zentrierplatte anzuordnen und diesen Durchbruch vorzugsweise als Langloch auszurühren. Durch die Ausführung des Durchbruchs als Langloch zirkuliert mehr Fluid beidseitig der Zentrierplatte. Durch die Anordnung an der Peripherie dient seine mit der Kreisbahn der Zentrierplatte zusammenfallende äußerste Kante als zusätzliche Abstützung der Zentrierplatte an der Innenseite des aufgesetzten Gehäusedoms.

Eine andere vorteilhafte Ausrührungsform der Erfindung wird erhalten, wenn die Zentrierplatte bezüglich der Symmetrieachse der Lochkontur symmetrisch ausgestaltet ist. Das erleichtert auch ungeübtem Personal den sicheren Einbau der Zentrierplatte der Verriegelungseinrichtung.

Ein wesentlicher Vorteil der Erfindung besteht darin, daß in ein und demselben Mehrfachfiltergehäuse Filterelemente unterschiedlicher Typgrößen betrieben und verriegelt werden können. Beispilesweise ist in einem Mehrfachfiltergehäuse, dessen Gehäusedom für den Betrieb von 30"-Filterkerzen (" bedeutet Zoll) ausgelegt ist, auch der Betrieb und die Verriegelung von 20"- und/oder 10"-Filterkerzen möglich, oder in einem Mehrfachfiltergehäuse, dessen Gehäusedom für den Betrieb mit 20"-Filterkerzen ausgelegt ist, ist auch der Betrieb und die Verriegelung von 20"- und/oder 10"-Filterkerzen möglich. Dazu wird, wenn nur eine einzige Typgröße verwendet wird, die Zentrierplatte bis auf den entsprechenden Bereich des zweiten Abschnitts mit dem Verriegelungsprofil abgesenkt und verriegelt, der der Höhe der Typgröße der Filterelemente entspricht. Wenn gleichzeitig mehrere Typgrößen an Filterelementen verwendet werden, wird eine Anzahl von Zentrierplatten verwendet, die der Anzahl der Typgrößen der Filterelemente entspricht und die hinsichtlich der Größe ihrer Öffnungen zur Aufnahme der Filterelemente und Führungsadapter oder hinsichtlich ihrer Gestalt so ausgeprägt sind, daß jeweils eine der Zentrierplatten bis auf die Verriegelungshöhe der jeweils kleineren Typgröße der Filterelemente abgesenkt und die letzte Zentrierplatte bis auf die Verreigelungshöhe der größten Typgröße abgesnkt werden kann.

Mehrfachfiltergehäuse mit einer sehr großen Anzahl von Filterelementen werden mit mehreren Abstandshalterstangen ausgerüstet. In die Zentrierplatte wird dann eine den Abstandshalterstangen entsprechende Anzahl von Öffnungen eingebracht. Dabei genügt es, wenn eine der Abstandshalterstangen mit dem Verriegelungsprofil ausgestattet ist. Es ist aber auch möglich, für jede Abstandshalterstange eine gesonderte Zentrierplatte vorzusehen.

Die Erfindung wird nun anhand der Zeichnungen näher erläutert. Dabei zeigen
- Fig. 1: einen Vertikalschnitt durch eine Ausführungsform eines erfindungsgemäßes Mehrfachfiltergehäuse und
- Fig. 2: eine Ausführungsform einer erfindungsgemäßen Zentrierplatte in Draufsicht.

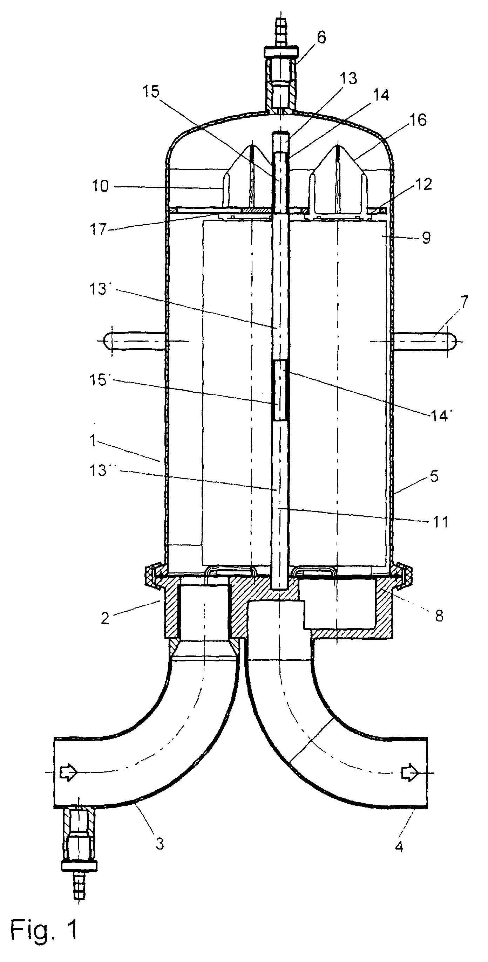

Gemäß Figur 1 besteht das Mehrfachfiltergehäuse **1** aus einer nicht näher zu betrachtenden Gehäusebasis **2** mit Anschlüssen für die Zufuhr von zu filtrierender Flüssigkeit **3** und für die Abruhr von Filtrat **4,** einem Gehäusedom **5** mit Ent- oder Begasungseinheit, beziehungsweise Ent- oder Belüftungseinheit, **6** und Handgriffen (optional) **7**. Eine Grundplatte **8** ist mit einer Vielzahl von patronenartigen Filterkerzen **9** einer einzigen Typgröße bestückt, welche mit Führungsadaptern **10** versehen sind. Die Verriegelungseinrichtung besteht aus einer Abstandshalterstange **11** und einer Zentrierplatte **12**. Die Zentrierplatte **12** nimmt die Führungsadaper **10** auf Die Abstandshalterstange **11** ist mit ihrem einen Ende senkrecht mit der Gehäusebasis **2** verbunden und liegt auf der Mittelachse des Mehrfachfiltergehauses **1.** Die Abstandshalterstange **11** besitzt drei Bereiche mit einem ersten Abschnitt **13**, **13'** und **13",** davon an ihrem freien Ende einen ersten Abschnitt **13,** und zwei Bereiche mit zweiten Abschnitten **14** und **14'** mit jeweils einem Verriegelungsprofil **15, 15'**. In der dargestellten Ausführungsform der Erfindung beginnt der Bereich des ersten Endabschnitts **13** der Abstandshalterstange **11** oberhalb der Führungsadapter **10** und endet innerhalb des sich verjüngenden Abschnitts **16** der Führungsadapter **10** und die untere Begrenzung des zweiten Abschnitts **14** mit dem Verriegelungsprofil befindet sich in Höhe der Führungsprofile **17** der Führungsadapter **10** der Filterelemente **9**. Die Abstandshalterstange **11** ist mit dem freien Ende durch die Verriegelungsöffnung **18** der Zentrierplatte **12** geführt. Die Zentrierplatte **12** ruht auf dem unteren Anschlag des zweiten Abschnitts 14 beziehungsweise auf dem Führungsprofil **17** des Führungsadapters **10** des Filterelements **9** mit der größten Bauhöhe. Die Zentrierplatte **12** war beim Aufsetzen im Bereich des ersten Endabschnittes **13** der Abstandshalterstange **11** radial um die und axial entlang der Abstandshalterstange **11** beweglich und ist im Bereich des sich daran anschließenden zweiten Abschnitts **14** mit dem Verriegelungsprofil in Verriegelungsstellung nur noch axial entlang der Abstandshalterstange **11** beweglich. Am Verriegelungsprofil **15'** können Filterelemente von einer geringeren Typgröße verriegelt werden.

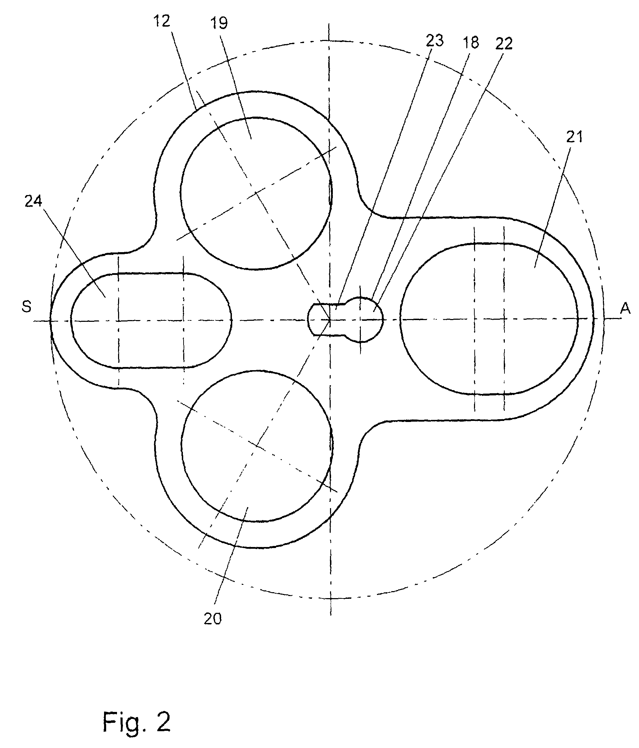

In der in der Figur 2 dargestellten Ausführungsform der Erfindung besitzt die Zentrierplatte **12** Öffnungen **19, 20** und **21,** die zur Aufnahme der Führungsadapter **10** vorgesehen sind. Dabei ist zur Erleichterung der Ver- und Entriegelung die Öffnung **21** als Langloch ausgeführt. Die Verriegelungsöffnung **18** hat eine schlüssellochähnliche Lochkontur aus einer kreisrunden Bohrung **22** mit einem zur Arretierung vorgesehenen Ausbruch **23**, der eine geringere Breite besitzt als der Durchmesser der Bohrung **22**. Der Mittelpunkt des Ausbruchs **23** stellt den Mittelpunkt der Zentrierplatte **12** dar, deren äußerste periphere Bereiche auf einem Kreisbogen liegen, der geringfügig kleiner ist als der Innenumfang des Mehrfachfiltergehäuses **1**. Die Verriegelungsöffnung **18** dient dazu, beim Aufsetzen der Zentrierplatte **12** die Abstandshalterstange **11** durch den kreisrunden Teil **22** der Lochkontur zu führen, durch Drehen und Absenken der Zentrierplatte **12** die Führungsadapter **10** mit den Öffnungen **19** bis **21** zu erfassen und nach Erreichen des Bereichs des zweiten Abschnitts **14** der Abstandshalterstange die Zentrierplatte **12** mit ihrem Ausbruch **22** über das Verriegelungsprofil **15** der Abstandshalterstange **11** zu verschieben, wodurch die Verriegelung erreicht ist. Die Zentrierplatte **12** verrügt außerdem über einen als Langloch gestalteten Durchbruch **24**, der mit seinem äußeren peripheren Bereich in Kontakt mit dem geschlossenen Gehäusedom **5** steht und die Verriegelung garantiert. Andernfalls läßt sich der Gehäusedom **5** nicht aufsetzen. In der dargestellten Ausführungsform der Zentrierplatte **12** befinden sich Öffnung **21**, Durchbruch **24** und Verriegelungsöffnung **18** auf einer Achse **S-A**, die die einzige Symmetrieachse der Zentrierplatte **12** bildet. Durch diesen in Bezug auf jede andere Achse asymmetrischen Aufbau wird der korrekte und sichere Einbau der Zentrierplatte **12** auch durch wenig erfahrenes Personal unterstützt.

### Liste der Bezugszeichen:

- 1: Mehrfachfiltergehäuse
- 2: Gehäusebasis
- 3: Anschluß für die Zufuhr von Fluiden
- 4: Anschluß für die Abfuhr von Fluiden
- 5: Gehäusedom
- 6: Ent- und/oder Begasungseinheit
- 7: Handgriffe
- 8: Grundplatte
- 9: patronenartige Filterelemente
- 10: Führungsadapter
- 11: Abstandshalterstange
- 12: Zentrierplatte
- 13: Bereich eines ersten Abbschnitts der Abstandshalterstange /(13', 13")
- 14: Bereich eines zweiten Abschnitts der Abstandshalterstange mit Verriegelungsprofil /(14')
- 15: Verriegelungsprofil /(15')
- 16: verjüngter Abschnitt der Führungsadapter
- 17: Führungsprofil der Führungsadapter an den Filterelementen
- 18: Verriegelungsöffnung
- 19-21: Öffnungen zur Aufnahme der Filterelemente oder der Führungsadapter
- 21: Langloch der Öffnungen zur Aufnahme der Filterelemente oder der Führungsadapter
- 22: kreisrunde Bohrung
- 23: Ausbruch
- 24: Durchbruch als Langloch an der Periperie der Zentrierplatte

## Patentansprüche

1. Mehrfachfiltergehäuse (1) mit Verriegelungseinrichtung für patronenartige Filterelemente (9), das über Anschlüsse zur Zu- (3) und Abfuhr (4) von Fluiden verfügt und mindestens aus Gehäusedom (5) und Gehäusebasis (2) mit Grundplatte (8) besteht, welche die Verriegelungseinrichtung aus einer Zentrierplatte (12) und einer Abstandshalterstange (11) trägt, die mit einem Ende rechtwinklig und starr mit der Gehäusebasis (2) oder der Grundplatte (8) verbunden ist, und die Grundplatte (8) mit Vorrichtungen zur Aufnahme und Fixierung einer Vielzahl von Filterelementen (9) versehen ist, die an ihrem der Grundplatte (8) abgewandten Ende Führungsadapter (10) besitzen,
**dadurch gekennzeichnet, daß**
die Zentrierpiatte (12) eine Verriegelungsöffnung (18) und wenigstens Öffnungen (19, 20, 21) zur Aufnahme der Filterelemente (9) besitzt und
die Abstandshalterstange (11) mit dem anderen freien Ende durch die Verriegelungsöffnung (18) der Zentrierplatte (12) greift derart, daß die Zentrierplatte (12) in Bereichen erster Abschnitte (13) der Abstandshalterstange (11) radial um die und axial entlang der Abstandshalterstange (11) und in Bereichen zweiter Abschnitte (14) der Abstandshalterstange (11) mit mindestens einem Verriegelungsprof (15) in Verriegelungsstellung nur noch axial entlang der Abstandshalterstange (11) beweglich ist, wobei
sich die Bereiche der zweiten Abschnitte (14) mit dem Verriegelungsprofil (15) in Höhe der oberen Hälfte, vorzugsweise des oberen Drittels der zu verriegelnden Filterelemente (9) befinden.

2. Mehrfachfiltergehäuse (1) nach Anspruch 1,
**dadurch gekennzeichnet, daß**
sich die Bereiche der zweiten Abschnitte (14) mit dem Verriegelungsprofil (15) in Höhe der Führungsadapter (10) der zu verriegelnden Filterelemente (9) befinden.

3. Mehrfachfiltergehäuse (1) nach Anspruch 1 oder 2,
**dadurch gekennzeichnet, daß**
die Verriegelungsöffnung (18) der Zentrierplatte (12) eine Lochkontur aus einer kreisrunden Bohrung (22) mit einem zur Verriegelung vorgesehenen Ausbruch (23) darstellt, der eine geringere Breite besitzt als der Durchmesser der Bohrung.

4. Mehrfachfiltergehäuse (1) nach Anspruch 3,
**dadurch gekennzeichnet, daß**
der Mittelpunkt des Ausbruchs (23) den Mittelpunkt einer kreisförmigen Zentrierplatte (12) bildet und ihr Kreisbogen kleiner ist als der Innenumfang des Mehrfachfiltergehäuses (1).

5. Mehrfachfiltergehäuse (1) nach den vorstehenden Ansprüchen,
**dadurch gekennzeichnet, daß**
die Zentrierpiatte (12) periphere Aussparungen und/oder Durchbrüche (24) aufweist, die eine Zirkulation des zu filtrierenden Fluids beidseits der Zentrierplatte (12) ermöglicht.

6. Mehrfachfiltergehäuse (1) nach den vorstehenden Ansprüchen,
**dadurch gekennzeichnet, daß**
die auf der Längsachse (S-A) der Lochkontur der Verriegelungsöffnung (18) der Zentrierplatte (12) angeordneten Öffnungen (21) zur Aufnahme der Filterelemente (9) oder ihrer Führungsadapter (10) als Langloch (21) ausgebildet sind.

7. Mehrfachfiltergehäuse (1) nach den vorstehenden Ansprüchen,
**dadurch gekennzeichnet, daß**
auf der Längsachse (S-A) der Lochkontur der Verriegelungsöffnung (18) der Zentrierplatte (12) ein Durchbruch (24) an der Peripherie der Zentrierplatte (12) angeordnet ist.

8. Mehrfachfiltergehäuse (1) nach den vorstehenden Ansprüchen,
**dadurch gekennzeichnet, daß**
die Zentrierplatte (12) bezüglich der Längsachse (S-A) der Lochkontur symmetrisch ausgestaltet ist.

9. Mehrfachfiltergehäuse (1) nach Anspruch 1 oder 2,
**dadurch gekennzeichnet, daß**
das Verriegelungsprofil (15) der Abstandshalterstange (11) so geformt ist, daß es in den Ausbruch (23) der Verriegelungsöffnung (18) der Zentrierplatte (12) formschlüssig einführbar ist.

10. Mehrfachfiltergehäuse (1) nach den Ansprüchen 1 bis 9,
**dadurch gekennzeichnet, daß**
die Verriegelungseinrichtung aus einer Zentrierplatte (12) und mehr als einer Abstandshalterstange (11) besteht.

11. Mehrfachfiltergehäuse nach den Ansprüchen 1 bis 9,
**dadurch gekennzeichnet, daß**
die Verriegelungseinrichtung aus mehreren Zentrierplatten (12) und mehr als einer Abstandshalterstange (11) besteht.

12. Mehrfachfiltergehäuse (1) nach vorstehenden Ansprüchen,
**dadurch gekennzeichnet, daß**
die Verriegelungseinrichtung zur gleichzeitigen Verriegelung von Filterlementen (9) unterschiedlicher Typgrößen in dem Mehrfachfiltergehäuse (1) mehrere Zentrierplatten (12) besitzt.

## Claims

1. Multi-filter housing (1) with a locking device for cartridge-like filter elements (9), which has connections for the feed (3) and discharge (4) of fluids and consists at least of a housing dome (5) and housing base (2) with a base plate (8), which supports the locking device consisting of a centring plate (12) and a spacer rod (11), which is rigidly connected at one end at right angles with the housing base (2) or the base plate (8), and the base plate (8) is provided with devices for receiving and fixing a plurality of filter elements (9), which have guide adapters (10) at the ends thereof remote from the base plate (8), **characterised in that** the centring plate (12) has a locking opening (18) and at least openings (19, 20, 21) for reception of the filter elements (9) and the spacer rod (11) engages by the other free end through the locking opening (18) of the centring plate (12) in such a manner that the centring plate (12) in regions of first sections (13) of the spacer rod (11) is movable radially about and axially along the spacer rod (11) and in regions of second sections (14) of the spacer rod (11) is movable by at least one locking profile (15) in a locking setting only axially along the spacer rod (11), wherein the regions of the second sections (14) with the locking profile (15) are disposed at the level of the upper half, preferably the upper third of the filter elements (9) to be locked.

2. Multi-filter housing (1) according to claim 1, **characterised in that** the regions of the second sections (14) with the locking profile (15) are disposed at the level of the guide adapters (10) of the filter elements (9) to be locked.

3. Multi-filter housing (1) according to claim 1 or 2, **characterised in that** the locking opening (18) of the centring plate (12) represents a hole contour consisting of a circularly round bore (22) with a break-out (23) which is provided for the locking and which has a smaller width than the diameter of the bore.

4. Multi-filter housing (1) according to claim 3, **characterised in that** the centre point of the brake-out (23) forms the centre point of a circular centring plate (12) and its arc is smaller than that of the inner circumference of the multi-filter housing (1).

5. Multi-filter housing (1) according to the preceding claims, **characterised in that** the centring plate (12) has peripheral cut-outs and/or passages (24) which enable a circulation of the fluid, which is to be filtered, on both sides of the centring plate (12).

6. Multi-filter housing (1) according to the preceding claims, **characterised in that** the openings (21), which are arranged on the longitudinal axis (S-A) of the hole contour of the locking opening (18) of the centring plate (12), are formed as an elongate hole (21) for reception of the filter elements (9) or the guide adapters (10) thereof.

7. Multi-filter housing (1) according to the preceding claims, **characterised in that** a passage (24) is arranged on the longitudinal axis (S-A) of the hole contour of the locking opening (18) of the centring plate (12) and at the periphery of the centring plate (12).

8. Multi-filter housing (1) according to the preceding claims, **characterised in that** the centring plate (12) is formed to be symmetrical with respect to the longitudinal axis (S-A) of the hole contour.

9. Multi-filter housing (1) according to claim 1 or 2, **characterised in that** the locking profile (15) of the spacer rod (11) is so shaped that it is introducible in mechanically positive locking manner into the break-out (23) of the locking opening (18) of the centring plate (12).

10. Multi-filter housing (1) according to claims 1 to 9, **characterised in that** the locking device consists of a centring plate (12) and more than one spacer rod (11).

11. Multi-filter housing (1) according to claims 1 to 9, **characterised in that** the locking device consists of several centring plates (12) and more than one spacer rod (11).

12. Multi-filter housing (1) according to the preceding claims, **characterised in that** the locking device comprises several centring plates (12) for simultaneous locking of filter elements (9) of differen ratings sizes in the multi-filter housing (1).

## Revendications

1. Boîtier filtrant multiple (1) muni d'un système de verrouillage pour éléments filtrants du type cartouches (9) qui dispose de branchements pour l'amenée (3) et l'évacuation (4) de fluides et se compose au moins d'un dôme de boîtier (5) et d'un socle de boîtier (2) muni d'une plaque de montage (8) qui supporte le système de verrouillage sur une plaque de centrage (12) et une tige entretoise (11) qui, par une extrémité, est raccordée de manière rectangulaire et rigide au socle (2) ou à la plaque de montage (8) et la plaque de montage (8) est pourvue d'un dispositif pour la réception et la fixation d'une pluralité d'éléments filtrants (9) qui comportent sur leur extrémité opposée à la plaque de montage (8) un raccord de guidage (10),
**caractérisé en ce que**
la plaque de centrage (12) comporte une ouverture de verrouillage (18) et au moins des ouvertures (19, 20, 21) pour la réception des éléments filtrants (9) et
**en ce que** la tige entretoise (11), par l'autre extrémité libre, met en prise, à travers l'ouverture de verrouillage (18), la plaque de centrage (12), de telle sorte que la plaque de centrage (12), dans la zone d'une première section (13) de la tige entretoise (11) peut être déplacée radialement autour de, et axialement le long de, la tige entretoise (11) et, dans la zone d'une deuxième section (14) de la tige entretoise (11), peut être déplacée seulement dans la direction axiale le long de la tige entretoise (11), avec au moins un profil de verrouillage (15) en position de verrouillage,
dans laquelle
les zones de la deuxième section (14) se trouvent, avec le profil de verrouillage (15), à la hauteur de la moitié supérieure, de préférence du tiers supérieur des éléments filtrants (9) à verrouiller.

2. Boîtier filtrant multiple (1) selon la revendication 1,
**caractérisé en ce que**
les zones de la deuxième section (14), avec le profil de verrouillage (15) se trouve à la hauteur du raccord de guidage (10) des éléments filtrants (9) à verrouiller.

3. Boîtier filtrant multiple (1) selon la revendication 1 ou 2,
**caractérisé en ce que**
l'ouverture de verrouillage (18) de la plaque de centrage (12) définit un contour de trou, à partir d'un alésage circulaire (22) muni d'un creux (23) prévu à des fins de verrouillage qui comporte une largeur plus petite que le diamètre de l'alésage.

4. Boîtier filtrant multiple (1) selon la revendication 3,
**caractérisé en ce que**
le point médian du creux (23) forme le point médian d'une plaque de centrage de forme circulaire (12) et a son arc de cercle plus petit que le pourtour interne du boîtier filtrant multiple (1).

5. Boîtier filtrant multiple (1) selon les revendications précédentes,
**caractérisé en ce que**
la plaque de centrage (12) présente des ouvertures et/ou des passages (24) périphériques qui permettent une circulation du fluide à filtrer de chaque côté de la plaque de centrage (12).

6. Boîtier filtrant multiple (1) selon les revendications précédentes,
**caractérisé en ce que**
les ouvertures (21) pratiquées sur l'axe longitudinal (S-A) du contour de trou de l'ouverture de verrouillage (18) de la plaque de centrage (12) sont formées pour recevoir les éléments filtrants (9) ou leur raccord de guidage (10) comme trou longitudinal (21).

7. Boîtier filtrant multiple (1) selon les revendications précédentes, **caractérisé en ce que**
sur l'axe longitudinal (S-A) du contour de trou de l'ouverture de verrouillage (18) de la plaque de centrage (12), un passage (24) est ménagé sur la périphérie de la plaque de centrage (12).

8. Boîtier filtrant multiple (1) selon les revendications précédentes, **caractérisé en ce que**
la plaque de centrage (12) est formée symétriquement par rapport à l'axe longitudinal (S-A) du contour de trou.

9. Boîtier filtrant multiple (1) selon la revendication 1 ou 2,
**caractérisé en ce que**
le profil de verrouillage (15) de la tige entretoise (11) est formé de telle sorte qu'il peut être introduit par engagement positif dans le creux (23) de l'ouverture de verrouillage (18) de la plaque de centrage (12).

10. Boîtier filtrant multiple (1) selon les revendications 1 à 9,
**caractérisé en ce que**
le système de verrouillage est composé d'une plaque de centrage (12) et de plus d'une tige entretoise (11).

11. Boîtier filtrant multiple selon les revendications 1 à 9,
**caractérisé en ce que**
le système de verrouillage est composé de plusieurs plaques de centrage (12) et de plus d'une tige entretoise (11).

12. Boîtier filtrant multiple (1) selon les revendications précédentes,
**caractérisé en ce que**
le système de verrouillage, pour un verrouillage simultané des éléments filtrants (9), comporte plusieurs plaques de centrage (12) de tailles différentes, dans le boîtier filtrant multiple (1).
